# FASCICULE DE BREVET EUROPEEN

(11) **EP 2 420 448 B1**
(45) Date de publication et mention de la délivrance du brevet: **01.01.2014**
(21) Numéro de dépôt: 11177318.0
(22) Date de dépôt: 11.08.2011
(51) Int. Cl.: H01J 25/34, H01J 23/033, B64G 1/50

(54) **Coupole absorbante pour tube à collecteur rayonnant**
Absorbierende Kuppel für ein Elektronenstrahlrohr
Absorbing dome for a radiating collector tube

(30) Priorité: 20.08.2010 FR 1003405
(43) Date de publication de la demande: 22.02.2012
(73) Titulaire: Astrium SAS, 92150 Suresnes (FR)
(72) Inventeur: Walker, Andrew, 31320 Pechbusque (FR); Flemin, Christian, 31280 Dremil-Lafage (FR)
(74) Mandataire: Fourcade, Emmanuelle

(56) Documents cités:
- EP-A1- 0 376 827
- EP-A1- 0 831 513
- EP-A2- 1 065 450
- US-A- 3 817 320
- US-A- 4 098 956
- US-A- 5 862 462
- LAMPERT C M: "COATINGS FOR ENHANCED PHOTOTHERMAL ENERGY COLLECTION", SOLAR ENERGY MATERIALS, NORTH-HOLLAND PUBLISHING COMPANY, AMSTERDAM, NL, vol. 1, 1 janvier 1979 (1979-01-01), pages 319-341, XP000900880, ISSN: 0165-1633, DOI: DOI:10.1016/0165-1633(79)90001-7

## Description

L'invention relève du domaine du contrôle thermique. Elle concerne plus particulièrement le contrôle thermique actif d'un équipement en environnement spatial, et vise notamment une application dans le cas d'un satellite de télécommunications stabilisé sur trois axes, et doté de tubes à ondes progressives à collecteur rayonnant.

### Contexte de l'invention et problème posé

Il est connu que l'un des problèmes des charges utiles de type électronique embarquées sur des satellites en environnement spatial est la dissipation de la chaleur produite par ladite charge utile.

En effet, dans le cas, par exemple, d'un satellite de télécommunications, la charge utile comporte fréquemment des tubes à ondes progressives ("TOP" ou "TWT" pour Traveling-Wave Tube, en langue anglaise), destinés à une amplification du signal à transmettre avec un très faible bruit de fond. Or ces tubes à ondes progressives dégagent une grande quantité de chaleur, qui doit être dissipée vers l'espace, pour éviter une élévation de température de la charge utile mettant en danger son fonctionnement correct. Le collecteur de ces tubes à ondes progressives à collecteur rayonnant fonctionne fréquemment à une température d'environ 200°C, alors que le tube lui-même est porté à quelques dizaines de degrés C. A titre purement informatif, la chaleur dégagée sur un satellite de télécommunications actuel atteint plusieurs kilowatts, et il est clair que la capacité de dissipation thermique est alors un élément dimensionnant de la puissance de la charge utile.

On considère ici le cas de satellites de télécommunications stabilisés en attitude sur trois axes, c'est-à-dire pointant une direction fixe au cours du temps. C'est typiquement le cas de satellites géostationnaires. Il est alors classique de définir pour ces satellites des faces dites Terre et anti-Terre, orientées vers la Terre ou à l'opposé de celle-ci, et des faces Est et Ouest, perpendiculaires à cette direction de la Terre, et des faces Nord et Sud, perpendiculaire à l'axe des pôles terrestres, et donc peu éclairées par le soleil par comparaison aux autres faces du satellite.

On définit pour la suite de la description le cas "chaud" comme la situation dans laquelle un tube rayonnant est soumis au rayonnement solaire, alors même que le tube rayonnant est en opération et donc produit une chaleur significative à dissiper. Au contraire, on définit le cas "froid" comme le cas où le collecteur rayonnant est dans l'ombre du satellite. On comprend que la différence de température entre ces deux cas se chiffre en dizaines de degrés.

Comme on le sait, la dissipation de chaleur ne peut, dans l'environnement spatial, être obtenue que par rayonnement. Divers dispositifs de dissipation de chaleur vers l'espace ont alors été envisagés pour les charges utiles de ces satellites stabilisés.

Parmi ceux-ci, le document brevet EP 0 831 513 et EP 0 376 827 (Thomson CSF 1988) décrit un tube à ondes progressives dont le collecteur transmet par conduction sa chaleur à un refroidisseur à ailettes situé sur la surface externe du satellite.

De même, le document brevet US 5 862 462 (Space Systems / Loral 1996) décrit un système de refroidissement de tubes à ondes progressives mettant en oeuvre des collecteurs rayonnants vers l'espace par l'intermédiaire d'un refroidisseur à ailettes.

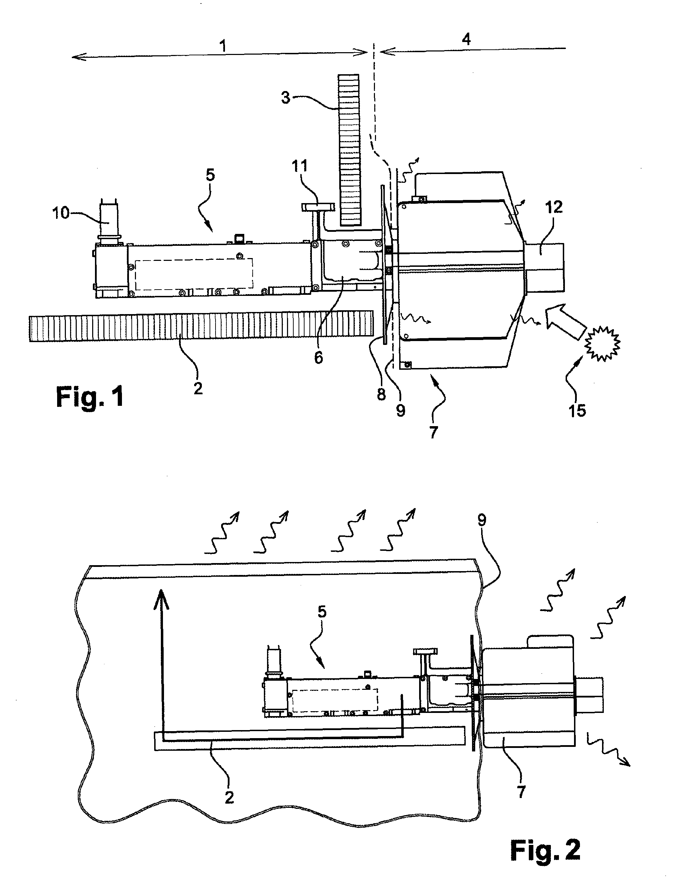

Ce principe du tube à collecteur rayonnant (TCR), connu en soi, est illustré de façon schématique sur la figure 1. Cette figure met en évidence la zone interne 1 au satellite, délimitée de façon simplifiée par un plancher 2 (qui est de fait une face Nord ou Sud du satellite) et une paroi 3, laquelle est par exemple orientée Est ou Ouest par rapport au soleil. Dans cette zone interne 1, la dissipation de chaleur se fait principalement par conduction. Au contraire, dans la zone externe 4 au satellite, la dissipation de chaleur se fait par rayonnement.

Le satellite comporte un ensemble de tubes à onde progressive 5, de type connu en soi. Chaque tube à ondes progressives 5 comporte une entrée 10 de signal à amplifier, une sortie 11 de signal amplifié, ainsi qu'un collecteur 6, qui traverse une paroi 3 du satellite et supporte un radiateur à ailettes 7, disposé à l'extérieur du satellite. Les ailettes, typiquement au nombre de huit, sont généralement de longueur égale et s'inscrivent dans un cercle.

Le rôle du radiateur à ailettes 7 est de rayonner environ 60% de la chaleur produite par le Tube à Ondes Progressives vers l'espace servant de source froide. Le reste de la chaleur, soit environ 40%, est dissipé dans la paroi soutenant le tube (voir figure 2).

En sens inverse, le radiateur à ailettes 7 reçoit un rayonnement émis par le soleil ou une autre source de rayonnement externe, et le transmet par conduction au collecteur 6 du tube à ondes progressives 5.

Une protection isolante multicouche 9 enveloppe et isole le satellite, réduisant l'entrée de rayonnement solaire ou de rayonnement généré par le radiateur à ailettes dans le satellite.

Un tel dispositif est nommé tube à collecteur rayonnant (en langue anglaise RCTWT de Radiatively Cooled Traveling-Wave Tube). De tels dispositifs sont classiquement installés sur les arêtes proches des faces Nord et Sud, de manière à ce que les collecteurs rayonnants disposent d'un facteur de vue vers l'espace le plus grand possible (l'angle solide sous lequel l'équipement peut émettre du rayonnement sans recevoir de rayonnement réfléchi), dans une zone peu éclairée par le soleil. Cependant, on comprend que, lorsque une série de ces tubes à collecteur rayonnant 5 sont disposés côte à côte, les radiateurs à ailettes 7 des tubes 5 situés entre d'autres tubes voient leur zone de rayonnement vers l'espace masqué par les radiateurs à ailettes 7 qui les entourent, ce qui réduit leur efficacité.

De même, du fait de la puissance rayonnée, l'espacement entre les refroidisseurs à ailettes doit éventuellement être augmenté, ce qui implique d'augmenter le pas entre les tubes à ondes progressives au sein de la charge utile. Or il est souhaitable, pour des raisons de performances de la charge utile, de réduire autant que faire se peut la longueur des guides d'ondes entre les antennes réceptrices, et les tubes à ondes progressives 5. Il est donc parfois nécessaire de disposer des tubes au milieu d'une face, ce qui est réduit naturellement la capacité de refroidissement du collecteur rayonnant, particulièrement s'il s'agit d'une face autre que Nord ou Sud.

Que ce soit pour des raisons de proximité des tubes ou de tubes dont les collecteurs sont disposés sur une face exposée au rayonnement solaire, certains des collecteurs rayonnant voient, dans les conditions les pires, leur température atteindre 220°C. Une telle température est susceptible de provoquer des dommages au niveau des matériaux composant le collecteur, et par exemple au niveau de la tête 12 du collecteur ("potting" en langue anglaise), qui solidarise les ailettes au collecteur par l'intermédiaire d'une colle. A température trop élevée, le tube associé risque la destruction. Ce problème de réduction de la température maximale des collecteurs rayonnants est donc critique.

On comprend que, pour cette application de dissipation de chaleur en ambiance spatiale, les dispositifs cités sont insuffisamment efficaces, ce qui entraîne des limitations dans la puissance dissipable. Les solutions évoquées entrainent des contraintes d'accommodation fortes, des impacts sur les performances RF et sur la masse de la charge utile envisageable. Une augmentation des longueurs des guides d'onde est en effet nécessaire si tous les tubes doivent être implantés sur les arêtes Est/Ouest du Module de Communication Télécom. La température des radiateurs des tubes à collecteur rayonnant est critique en cas chaud, et il n'y a pas de paramètre d'ajustement autre que le pas entre les tubes, qui est figé en début de programme.

### Objectifs de l'invention

La présente invention a donc pour objet de remédier aux inconvénients précités en proposant un nouveau dispositif de contrôle thermique de charge utile de satellite.

Selon un second objectif de l'invention, celle-ci est peu onéreuse à mettre en oeuvre.

### Exposé de l'invention

L'invention vise en premier lieu un dispositif de contrôle thermique pour un équipement, ledit équipement étant intégré sur un engin disposé dans un environnement de vide poussé, une partie externe de l'équipement faisant saillie à l'extérieur d'une paroi de l'engin, et étant soumis à un flux de rayonnement par une source externe,
le dispositif comportant :
   - des premiers moyens de captation, d'au moins une partie du rayonnement émis par la source de rayonnement externe, lesdits moyens de captation comportant un écran absorbant adapté à être disposé entre la partie externe de l'équipement et la paroi de l'engin, cet écran présentant, sur au moins une partie de sa face antérieure, destinée à être disposée du côté éloigné de la paroi de l'engin, une surface absorbante avec une absorptivité α_{SOLAR} la plus grande possible dans le domaine du rayonnement solaire, couplée à une faible émissivité ε_{IR} dans le spectre infrarouge,
   - au moins une seconde surface d'émission avec une forte émissivité ε_{IR} dans le spectre infrarouge, rayonnant vers l'extérieur de l'engin mais non vers la partie externe de l'équipement,
   - des moyens de transport de chaleur entre la surface absorbante et les surfaces d'émission.

A titre de simplification, dans un cas particulier de mise en oeuvre, un capteur disposé autour d'un équipement embarqué sur un satellite reçoit le rayonnement solaire dans la bande visible et un radiateur distant évacue cette énergie sous forme de rayonnement infrarouge, de manière à éviter que le rayonnement solaire reçu par le capteur ne soit réfléchi vers l'équipement. On contribue de cette manière à réduire la température de l'équipement.

Dans cette configuration, il est loisible de disposer les moyens d'émission de rayonnement à distance de l'écran absorbant, et donc typiquement dans une zone non soumise au rayonnement externe, ou ne supportant pas d'équipement sensible à ce dit rayonnement.

On comprend que la seconde surface d'émission rayonne vers l'extérieur de l'engin soit directement, soit indirectement après réflexion sur un revêtement (par exemple de type revêtement isolant multicouche "MLI") de la paroi externe de l'engin.

Selon un mode de réalisation préféré, l'écran absorbant est réalisé dans un matériau très conducteur de la chaleur, et présente sur au moins une partie de sa face postérieure, adaptée à être orientée vers la paroi de l'engin, une forte émissivité dans le spectre infrarouge, typiquement supérieure ou égale à 0.7.

On comprend que dans ce cas, une partie de la chaleur reçue par l'écran absorbant est réémise par sa face arrière.

Plus particulièrement dans ce cas :
- les moyens de transport de chaleur comprennent une boucle fluide haute température à laquelle est liée conductivement l'écran absorbant au niveau d'au moins un évaporateur,
- ladite boucle fluide étant elle-même liée conductivement à un radiateur haute température formant moyens d'émission de rayonnement..

Selon un premier mode de réalisation, l'écran absorbant présente une forme globalement concave apte à être disposée autour de la partie externe de l'équipement.

Dans ce cas, selon une mise en oeuvre avantageuse, l'écran absorbant comporte une première surface sensiblement plane et apte à être disposée de façon parallèle à la paroi du satellite, dotée de deux rebords latéraux inclinés selon un angle d'environ 20 à 50° par rapport à ladite première surface.

Alternativement, l'écran absorbant comporte une surface plane, la partie centrale de ladite surface plane recevant un revêtement absorbant présentant une forte absorptivité du rayonnement solaire, les bords de cette surface recevant un revêtement hautement émissif dans le domaine infrarouge

Selon un mode préféré de réalisation, l'écran absorbant comporte des moyens de fixation et d'isolation conductive de manière à le disposer de façon sensiblement perpendiculaire à l'axe principal de la partie externe de l'équipement.

Dans un mode de réalisation facilitant le montage du dispositif tardivement sur un satellite en cours d'intégration, l'écran absorbant est composée de plusieurs parties adaptées à être assemblées autour de la partie externe de l'équipement, lorsque celui-ci est déjà installé sur un engin.

Dans une variante avantageuse, l'écran absorbant est un élément de couverture isolante multicouche haute température absorbante comportant une feuille de forte absorptivité du rayonnement solaire et faible émissivité ε_{IR} dans le spectre infrarouge. Cette disposition correspond à une mise en oeuvre peu onéreuse du dispositif

Sous un autre aspect, l'invention vise un satellite, comportant au moins un dispositif de contrôle thermique tel qu'exposé plus haut.

Sous encore un autre aspect, l'invention vise un procédé d'aménagement thermique d'un satellite tel qu'exposé, comportant une étape d'installation d'au moins un écran absorbant sur la partie externe d'au moins un équipement, selon leur température maximale estimée ou mesurée lors d'un essai.

Sous encore un autre aspect, l'invention vise un procédé d'aménagement thermique d'un satellite tel qu'exposé, comportant une étape d'installation d'au moins un écran absorbant sur au moins un radiateur de tubes à collecteur rayonnant, selon leur température maximale estimée.

Dans ce cas, préférentiellement, le procédé comporte une étape d'installation d'au moins un écran absorbant sur au moins un radiateur de tube disposé au centre de faces Est ou Ouest, ou sur au moins radiateur disposé entre d'autres radiateurs.

### Brève description des figures

Les buts et avantages de l'invention seront mieux compris à la lecture de la description et des dessins d'un mode particulier de réalisation, donné à titre d'exemple non limitatif, et pour lequel les dessins représentent :
- figure 1 (déjà citée) : un schéma de principe d'un tube à collecteur rayonnant, en vue de côté,
- figure 2 (déjà citée) : un schéma de principe des modes de dissipation de la chaleur générée par un tube à collecteur rayonnant,
- figure 3 : un schéma explicatif de l'influence du rayonnement solaire sur la température du radiateur d'un tube à collecteur rayonnant, en l'absence de dispositif tel que décrit à titre d'exemple de mise en oeuvre de l'invention,
- figure 4 : un schéma analogue à la figure 3, lorsqu'une coupole absorbante est installée autour du radiateur,
- figure 5 : une illustration d'une première variante de mis en oeuvre de l'invention,
- figure 6 : une illustration d'une seconde variante de mise en oeuvre de l'invention, utilisant une boucle fluide et un radiateur déporté,
- figure 7 : une illustration d'une autre variante de mise en oeuvre de l'invention, utilisant une couverture isolante multicouche spécifique et absorbante,
- figure 8 : une section schématique d'une couverture d'isolation multicouche haute température, telle qu'utilisée dans la variante de la figure 7.

### Description détaillée d'un mode de réalisation de l'invention

L'invention est destinée à être utilisée notamment dans le cadre d'un engin spatial, dans le présent exemple nullement limitatif un satellite en orbite autour de la Terre. On considère ici un satellite de télécommunications en orbite géostationnaire stabilisé sur trois axes. Il reste cependant clair que l'invention s'applique également à tout autre type de support placé dans le vide et destiné à dissiper sa chaleur purement par rayonnement.

On définit pour la suite de la description le terme de spectre infrarouge par la bande de longueurs d'ondes comprise approximativement entre 780 nm et 100 µm, et le spectre solaire par la bande comprise entre 10 et 780 nm.

L'invention est ici décrite dans une application à un tube à collecteur rayonnant (tube radiatif), tel que décrit plus haut en référence aux figures 1 et 2, doté d'un radiateur externe au satellite, et agencé au sein du satellite de manière à déterminer un espace libre, d'au moins quelques millimètres d'épaisseur, entre le bord du radiateur le plus proche de la paroi 3 du satellite, et la couverture d'isolation multicouche 9. Elle s'applique cependant plus largement à tout équipement dont une partie fait saillie hors d'un satellite ou véhicule placé dans un environnement de vide poussé et subissant un réchauffement par rayonnement émis par une source externe 15, le soleil dans le présent exemple.

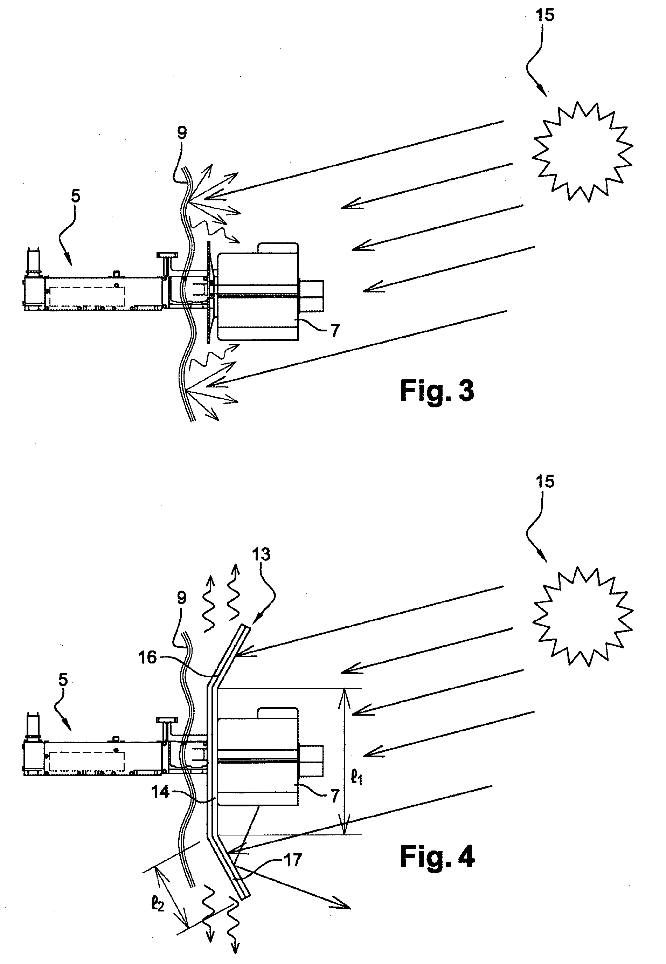

Tel qu'illustré figure 4 dans une mise en oeuvre particulière, le dispositif de contrôle thermique comporte un écran absorbant 13, interposé entre un ou plusieurs radiateurs à ailettes 7 de collecteurs rayonnants et la protection isolante multicouche 9. On comprend que cet écran absorbant est situé en arrière des radiateurs à ailettes 7, vis-à-vis de l'espace. De la sorte, il ne gène pas le rayonnement émis par le radiateur à ailettes 7 du collecteur rayonnant vers l'espace. Par contre, il réduit considérablement le facteur de vue de la protection isolante multicouche 9 par le radiateur à ailettes 7 du collecteur rayonnant, réduisant de la sorte le rayonnement susceptible d'être émis par le radiateur à ailettes 7 vers ladite protection 9.

Dans la mise en oeuvre nullement limitative illustrée figure 4, l'écran absorbant présente une forme globalement concave autour du radiateur à ailettes 7 du collecteur rayonnant 6. L'écran absorbant 13 comporte, dans le présent exemple, une première surface 14, rectangulaire, sensiblement plane et parallèle à la paroi 3 du satellite, dotée de deux rebords latéraux 16, 17 inclinés selon un angle d'environ 30 à 45° par rapport à ladite première surface 14.

La première surface 14 comporte un évidement (non visible sur la figure 4), au niveau de l'axe du collecteur rayonnant, pour permettre le passage de celui-ci. Dans le présent exemple, cet évidement est de forme rectangulaire et de dimensions juste supérieures à celles du collecteur rayonnant 6. On comprend que le collecteur rayonnant 6 n'est pas en contact direct avec l'écran absorbant 13 tel que décrit, pour éviter une conduction thermique entre eux.

La largeur /*1* de la première surface 14 est supérieure à l'envergure des ailettes du radiateur 7, et ici d'environ quarante centimètres, pour une longueur qui dépend du nombre de collecteurs rayonnants concernés par le dispositif. A titre purement indicatif, la longueur de la première surface peut ainsi être de l'ordre de 120 centimètres si l'écran absorbant 13 doit être disposé derrière cinq collecteurs rayonnants.

La largeur /*2* des rebords latéraux est ici de l'ordre de dix centimètres, avec une longueur égale à celle de la première surface 14 de l'écran absorbant 13.

Dans une variante (non illustrée) pour laquelle l'écran absorbant 13 entoure un seul collecteur rayonnant 7, l'écran comporte une première surface 14 en forme de disque, entouré par un bord incliné 16 tronconique.

L'écran absorbant 13 est réalisé en matériau léger très conducteur de la chaleur, adapté à supporter une température de plus de 200°C. Il est dans le présent exemple réalisé en aluminium, selon une technique connue de l'homme de l'art. Dans une variante de réalisation, l'écran absorbant 13 est réalisé en matériau composite à haute conductivité.

De manière à faciliter son installation autour d'un ou plusieurs radiateurs à ailettes 7 de collecteurs rayonnants, l'écran absorbant 13 est ici réalisé en deux parties sensiblement symétriques, assemblées en place, par exemple par vissage ou autre technique connue.

La face avant de l'écran absorbant 13 (côté radiateur à ailettes 7) reçoit, dans le présent exemple, un revêtement absorptif en nickel poli, de manière à lui conférer une forte absorptivité du rayonnement solaire, typiquement α_{SOLAR} =0,9, couplée à une faible émissivité dans l'infrarouge ε_{IR} =0,06.

La face arrière de l'écran absorbant 13 (côté couverture isolante multicouches "MLI") reçoit, dans le présent exemple, un revêtement hautement émissif, par exemple de type connu sous le nom commercial Kepla coat (marque déposée) qui est un revêtement noir à oxydation plasmique.

Ce revêtement hautement émissif est ici caractérisé par les valeurs suivantes
- émissivité solaire α_{SOLAR} = 0.9,
- émissivité ε_{IR} dans le domaine infrarouge approximativement égale à 0.8.

Il est clair que dans la présente mise en oeuvre, l'écran absorbant 13 est destiné à être placé en orbite avec le satellite, et doit donc être compatible avec l'environnement spatial. Ses caractéristiques mécaniques et géométriques sont donc adaptées pour tenir compte des contraintes au lancement et lors du vol spatial : tenue au dégazage, cyclage thermique, charges électrostatiques, irradiations UV, flux aérothermique au lancement, contraintes mécaniques au lancement et en vol (particules). L'écran absorbant 13 est solidarisé aux parois 2, 3 du satellite par des moyens connus en soi, en respectant un découplage thermique entre l'écran absorbant 13 et le satellite, et le dispositif comporte une mise à la masse de cet écran absorbant 13.

### Mode de fonctionnement

L'écran absorbant 13 est installé autour d'un certain nombre de radiateurs 7 de tubes à collecteur rayonnant 5, selon leur température maximale, par exemple telle que calculée durant la phase de conception, ou observée lors de tests de simulation. En particulier, cet écran absorbant 13 peut être typiquement installé sur les radiateurs 7 de tubes 5 disposés au centre de faces Est ou Ouest, ou sur des radiateurs situés entre d'autres radiateurs, et disposant, de ce fait, d'un angle solide de rayonnement inférieur. Il est clair que la forme et la surface de l'écran absorbant 13 peuvent être adaptées aux conditions spécifiques d'environnement de chaque tube, ce qui fournit une grande souplesse dans l'aménagement.

Le mode de fonctionnement s'apprécie par comparaison avec la figure 3 qui illustre la situation en l'absence de dispositif selon l'invention. Dans la situation antérieure, les rayons solaires viennent se refléter sur la surface de la protection isolante multicouche 9 du satellite, et une partie de ce rayonnement est réémis vers le radiateur à ailettes 7 d'un collecteur rayonnant 6. De plus, une partie de l'échauffement de la protection vient également contribuer à chauffer plus encore ledit radiateur à ailettes 7. Dans ces conditions, le radiateur à ailettes 7 du collecteur rayonnant 6 subit un échauffement significatif, qui peut l'amener au dessus sa température de qualification.

En effet, il a été constaté que pour un radiateur 7 supposé émettre vers l'espace 40 watts de chaleur provenant du collecteur rayonnant 6, plus de 20 watts additionnels étaient reçus en provenance de l'environnement externe : protection multicouche, autres radiateurs, rayonnement solaire direct. C'est-à-dire qu'un tiers de la chaleur rayonnée par le radiateur est due à des flux en provenance de l'environnement externe. Une telle situation peut amener le radiateur à fonctionner 60°C au dessus de sa température théorique de fonctionnement, typiquement à 220°C au lieu de 160°C en l'absence de flux externes.

Par contre, lorsqu'un dispositif de contrôle thermique tel que décrit plus haut est installé autour d'un collecteur rayonnant, la face avant de l'écran absorbant 13, tournée vers le radiateur à ailettes 7, absorbe la plus grande partie du rayonnement solaire incident, qui n'est alors plus réfléchi du fait de la forte absorptivité ni réémis du fait de la faible émissivité de cette face dans l'infrarouge vers le radiateur 7. La chaleur absorbée est transmise par l'écran absorbant, réalisé en matériau fortement conductif, vers sa face arrière. Celle-ci est hautement émissive dans l'infrarouge, et réémet en conséquence la chaleur de l'écran absorbant 13 vers la protection isolante multicouche 9, et vers l'espace. De cette manière, la contribution du rayonnement solaire à l'échauffement du radiateur 7 se trouve nettement réduite, ainsi que la contribution de rayonnement infra rouge venant de la paroi de l'engin.

De plus, la face avant de l'écran absorbant, de faible émissivité infrarouge, réfléchit le rayonnement infrarouge émis par le radiateur à ailettes 7, ce qui maximise l'énergie rayonnée vers l'espace.

### Avantages de l'invention

En cas dit "chaud", c'est-à-dire lorsque le tube à collecteur rayonnant est en fonctionnement, la réduction de température du radiateur obtenu par utilisation d'un dispositif tel que décrit, a été estimée entre 10°C et 20°C suivant la position du tube au sein du satellite, et la configuration externe autour du tube.

Le dispositif selon l'invention permet donc de réduire dans ce cas chaud la température du radiateur 7 des tubes à collecteur rayonnant (partie externe au niveau du collecteur rayonnant 6) qui est un élément critique. Elle permet de maintenir la température du radiateur à ailettes 7 à un niveau acceptable suivant les configurations.

Ceci permet une plus grande souplesse au niveau de l'accommodation de ces tubes sur un satellite et une meilleure optimisation de la charge utile. Il en résulte en effet un élargissement des possibilités d'implantation des tubes à collecteur rayonnant sur un satellite de télécommunications, et une possibilité d'optimiser les longueurs de guides d'onde.

L'aménagement interne et externe de la charge utile s'en trouve donc facilité, car l'invention peut être appliquée localement sur un ou plusieurs tubes en tant que paramètre d'ajustement supplémentaire.

De façon résumée, les avantages du dispositif de dissipation de chaleur selon l'invention sont :
- une simplicité de réglage de la température d'un tube radiatif (technologie et pièce existantes),
- une capacité à réaliser cet ajustement localement et tardivement en cours de programme si nécessaire,
- une intégrité mécanique du tube à ondes progressives non modifiée,
- une réduction du stress thermique dudit tube,
- un faible coût de mise oeuvre,
- un impact sur la masse mesuré,
- une possibilité de réduire le pas (espacement) entre des tubes, du fait de leur température de fonctionnement plus basse.

### Variantes de l'invention

La portée de la présente invention ne se limite pas aux détails des formes de réalisation ci-dessus considérées à titre d'exemple, mais s'étend au contraire aux modifications à la portée de l'homme de l'art.

L'application est possible sur tous les types de tubes à collecteur rayonnant comportant des moyens de fixer un écran de découplage radiatif, en s'adaptant à leur géométrie ou dimensions spécifiques.

Dans une variante de mise en oeuvre, le revêtement hautement émissif de la face arrière de l'écran absorbant 13 est un revêtement de type «céramique blanche avec oxydation plasmique». Ce revêtement est destiné aux hautes températures jusqu'à +450°C, ce qui est largement compatible de la température maximale du radiateur. L'épaisseur du revêtement est de l'ordre de 100µm,

Ses caractéristiques thermo-optiques sont : une absorptivité solaire début de vie voisine de 0.26 / absorptivité solaire fin de vie inférieure à environ 0.55, et une émissivité ε en infrarouge proche de 0.83.

Dans une autre variante, la face arrière de l'écran absorbant 13 (côté éloigné de la paroi de l'engin) reçoit un revêtement hautement émissif de type anodisation sulfurique.

Ce revêtement est caractérisé par les valeurs suivantes :
- absorptivité solaire début de vie α_{SOLAR} = 0.45 / absorptivité solaire fin de vie α_{SOLAR} = 0.7,
- émissivité ε_{IR} dans le domaine infrarouge approximativement égale à 0.8.

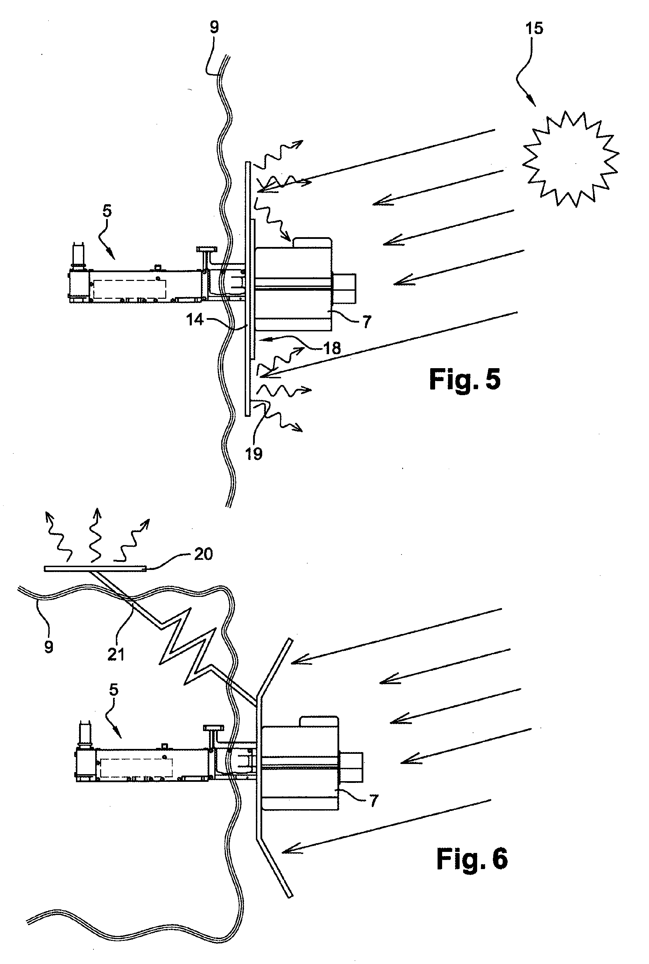

Dans une variante de forme d'écran absorbant 13 illustrée par la figure 5, celui-ci ne comporte pas de rebords latéraux 16, 17, mais uniquement une surface plane14. Dans cette variante, seule la partie centrale 18 de ladite surface plane 14 reçoit un revêtement présentant une forte absorptivité du rayonnement solaire, par exemple en nickel poli. Les bords 19 de cette surface plane 14 (partie la plus éloignée du radiateur 7) reçoivent alors un revêtement identique à celui de la face arrière, c'est-à-dire fortement émissif, par exemple réalisé en matériau de type Kepla coat (marque déposée).

Cette disposition permet de transférer à distance la chaleur reçue du soleil juste autour du collecteur rayonnant, avant de la réémettre vers l'espace.

Cette variante de mise en oeuvre présente l'avantage de réduire l'encombrement du dispositif.

Dans une autre variante de mise en oeuvre, illustrée par la figure 6, l'écran absorbant 13 est lié conductivement à une boucle fluide haute température 21 au niveau d'au moins un évaporateur (non représenté sur la figure), plaqué contre la face arrière de l'écran absorbant 13. Chaque évaporateur est relié conductivement à l'écran absorbant 13 par l'intermédiaire d'un joint hautement conducteur et d'une pièce d'interface.

Le joint hautement conducteur, conformé par exemple en feuille ou plaque mince rectangulaire, est de type composé de graphite pratiquement pur, et typiquement disponible sous le nom commercial de joint Sigraflex (marque déposée).

La pièce d'interface est plaquée mécaniquement contre le joint conducteur en une série de points de fixation, de manière à assurer la meilleure conduction possible entre l'écran absorbant 13 et la pièce d'interface. Cette pièce d'interface est ici réalisée en matériau métallique, par exemple aluminium.

Elle supporte l'évaporateur, disposé sensiblement le long de son axe longitudinal. Cet évaporateur est de type connu en soi.

Chaque boucle fluide LHP (préférentiellement au nombre de deux à titre de redondance) est également couplée conductivement à un radiateur haute température 20 déporté à distance ou sur une autre face du satellite, par des moyens connus en soi.

On entend par déporté dans le satellite le fait que le radiateur haute température 20 peut être disposé à plusieurs dizaines de centimètres de l'évaporateur si besoin est, selon les contraintes d'aménagement des faces du satellite, et en installant cependant préférentiellement le radiateur haute température 20 sur une face non soumise au rayonnement solaire.

Dans cette variante, l'écran absorbant 13 comporte, comme dans la description donnée plus haut, un revêtement absorbant adapté à absorber le rayonnement solaire sur sa face avant. Par contre, il ne comporte pas de revêtement particulier sur sa face arrière, la zone fortement émissive étant déportée au niveau du radiateur haute température 20.

Sur le radiateur à haute température 20, le tube de la boucle fluide est avantageusement disposé en forme de serpentin pour homogénéiser la température dudit radiateur.

Le radiateur à haute température présente par exemple une émissivité dans le domaine infrarouge supérieure à 0.82, une absorptivité solaire en début de vie inférieure à 0.2, et une absorptivité solaire en fin de vie inférieure à 0.27. Il peut par exemple comporter un revêtement de type Kepla coat (marque déposée), déjà mentionné, ou tout autre revêtement fortement émissif dans le domaine infrarouge.

L'ensemble formé par la coupole absorbante 13, la boucle fluide et le radiateur haute température est dimensionné selon des règles classiques bien connues de l'homme du métier.

Une thermistance, non illustrée sur les figures, est installée sur le radiateur à ailettes 7 de manière à contrôler sa température au cours du temps.

Le dispositif comporte également une connectique (non illustrée sur les figures) adaptée à l'activation de la boucle fluide haute température, ainsi que des moyens de commande associés (également non illustrés).

Ces moyens de commande prennent typiquement la forme d'un processeur doté d'une mémoire supportant un logiciel de pilotage de la boucle fluide, selon des données d'environnement reçues par des capteurs d'environnement, notamment : flux solaire reçu, température du radiateur à ailettes 7.

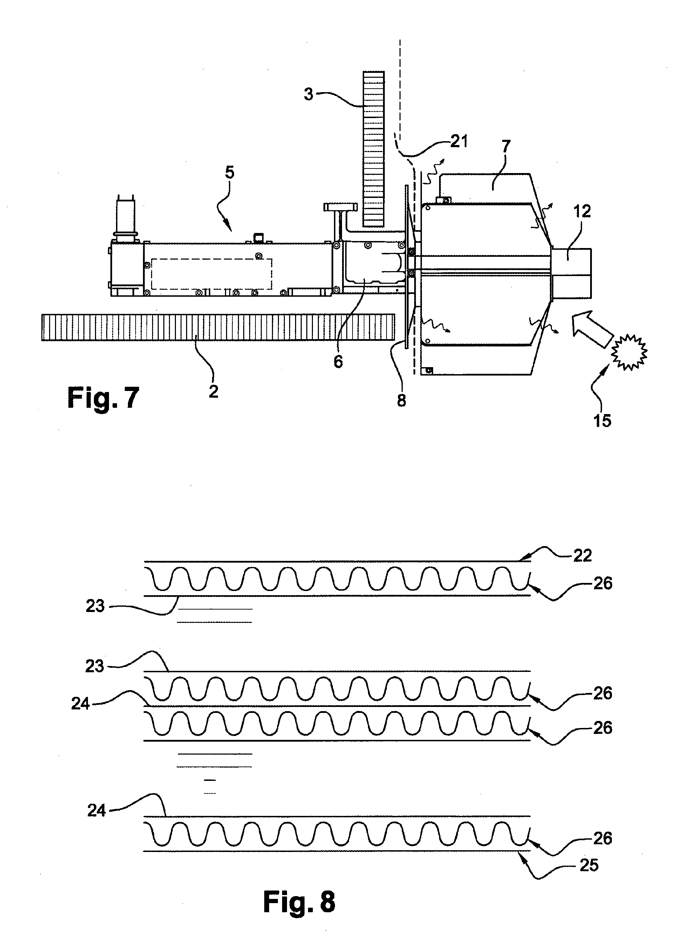

Dans encore une autre variante de mise en oeuvre (voir figure 7), la coupole isolante, citée dans la description plus haut, est remplacée par un élément de couverture d'isolation multicouche (MLI) haute température absorbante, telle que par exemple illustrée par la figure 8.

Comme on le voit, une telle couverture d'isolation multicouche absorbante 21, connue en soi, comporte typiquement de l'extérieur vers l'intérieur (soit de haut en bas sur la figure 8) une feuille de titane 22 d'environ quinze microns d'épaisseur, environ quatre feuilles d'aluminium 23 d'environ douze µm d'épaisseur, environ dix feuilles de Kapton (marque déposée) 24 d'une épaisseur approximative de 7.5 µm, aluminisées sur une face, et une feuille de Kapton (marque déposée) 25 de environ vingt cinq µm, aluminisée sur une face, ces différentes feuilles étant séparées par environ quinze couches 26 minces de tissu de verre appelé Tissuglas (marque déposée) ayant une épaisseur de quelques dizaines de µm.

Cette couverture d'isolation multicouche haute température absorbante 21 remplace localement la couverture d'isolation multicouche 9 sur une largeur de 600mm environ, au voisinage du collecteur rayonnant. Elle est de forme globalement plane. La feuille de titane est positionnée coté externe, c'est à dire en vue du radiateur du collecteur rayonnant 6.

Dans le présent exemple de mise en oeuvre, la couverture 21 est fixée sur le corps du satellite par un ensemble de pions (non illustrés figure 7), par exemple réalisés en titane, et de type connu en soi.

On comprend qu'en fonctionnement, la température de la feuille externe en titane s'échauffe et s'équilibre en fonction du flux solaire absorbé et des couplages radiatifs avec l'espace et l'environnement externe du satellite. Cette feuille en titane assure donc la fonction d'absorbeur solaire (grâce à sa forte absorptivité solaire) et un découplage radiatif avec le radiateur du tube à collecteur rayonnant (du fait de sa faible émissivité IR). La chaleur absorbée par la feuille externe de la couverture d'isolation multicouche MLI est partiellement transmise vers la paroi de l'engin à travers les différentes couches constituant la couverture d'isolation multicouche MLI par échanges conductifs et radiatifs entre les couches : cette chaleur transmise est redistribuée alors de manière uniforme par rayonnement ou par conduction vers les parties internes de l'engin non critiques en température ou vers un radiateur externe déporté via des caloducs ou des boucles fluides.

La solution avec une feuille de titane "nue" fait office d'absorbeur solaire avec des performances thermiques faibles mais qui peuvent suffire suivant le besoin, c'est à dire permettre d'obtenir un refroidissement du radiateur du tube à collecteur rayonnant de l'ordre de 2°C à quelques degrés Celsius suivant l'âge du satellite et sa configuration externe.

Suivant le cahier des charges thermique, il est loisible d'améliorer le concept exposé ci-dessus en déposant sur cette feuille de Titane un revêtement absorbant plus performant du type :
- Ni brillant / Ni noir : absorptivité solaire début de vie et fin de vie α = 0.9 et émissivité ε = 0.06
- NiCr / SiO : absorptivité solaire début de vie et fin de vie α = 0.7 et émissivité ε = 0.045
- Cr brillant / Cr noir : absorptivité solaire début de vie et fin de vie α = 0.95 et émissivité ε = 0.15

Les deux premières solutions permettent d'atteindre un refroidissement du radiateur du tube à collecteur rayonnant pouvant aller jusqu'à une dizaine de degré Celsius environ.

Les revêtements ci-dessus peuvent aussi être utilisés dans d'autres exemples de l'invention.

Cette variante permet ici encore de ne pas nécessiter de modification de l'intégrité du tube à collecteur rayonnant. Elle permet par ailleurs d'obtenir une masse additionnelle très faible à embarquer sur le satellite tout en étant de mise en oeuvre particulièrement simple.

Cette variante ne créé pas d'occultation du champ de vue du radiateur du tube à collecteur rayonnant, du fait de la forme globalement plane de la couverture d'isolation multicouche haute température absorbante 21.

Elle n'a pas d'impact sur la géométrie externe du satellite.

On comprend que la taille de l'élément de couverture d'isolation multicouche haute température absorbante 21 est adaptable suivant le nombre de tubes à collecteur rayonnants à équiper, et le cahier des charges thermique,

Enfin, cette variante constitue un moyen d'ajustement local de la température d'un ou plusieurs tubes à collecteur rayonnant en cours ou en fin de développement d'un programme de satellite.

Dans toute la description, on a utilisé à titre d'exemple le cas de tubes à collecteur rayonnant, dont le collecteur comporte un radiateur externe au satellite, et destiné à dissiper la chaleur émise par le tube.

Il reste clair que le dispositif, tel qu'il a été exposé ci-dessus, est plus généralement adaptable à tout équipement comportant une partie externe au satellite, donc soumis au rayonnement solaire et devant être refroidi ou maintenu à une température prédéterminée, par exemple antenne, capteur optique...

En particulier, le dispositif tel que décrit est utilisable pour des tuyères dans la mesure où, lorsqu'elles ne sont pas en fonctionnement, leur température doit demeurer en dessous d'une valeur maximale, notamment pour éviter l'évaporation du carburant présent dans leur tubulure d'alimentation. Dans ce cas, une protection en coupole isolante, telle qu'exposée plus haut, disposée sensiblement au niveau du col de la tuyère permet d'éviter le réchauffement de ladite tuyère par le rayonnement réfléchi par la paroi du satellite, et contribue donc à refroidir celle-ci.

On comprend qu'ici encore, le but est d'augmenter le facteur de vue vers l'espace, c'est-à-dire l'angle solide sous lequel l'équipement peut émettre du rayonnement sans recevoir de rayonnement réfléchi.

Il est à noter que, dans le cas de tuyère, lorsque celle-ci est en fonctionnement, la coupole isolante sert également d'isolant pour la paroi du satellite vis-à-vis de la chaleur émise par ladite tuyère.

## Revendications

1. Engin disposé dans un environnement de vide poussé, comportant au moins un équipement, une partie externe (7) de l'équipement faisant saillie à l'extérieur d'une paroi (3) de l'engin, et étant soumis à un flux de rayonnement par une source externe (15), l'engin comprenant un dispositif de contrôle thermique,
**caractérisé en ce que** le dispositif de contrôle thermique comporte:
- des premiers moyens de captation, d'au moins une partie du rayonnement émis par la source de rayonnement externe (15), lesdits moyens de captation comportant un écran absorbant (13) disposé entre la partie externe (7) de l'équipement et la paroi (3) de l'engin, cet écran (13) présentant, sur au moins une partie de sa face antérieure, disposée du côté éloigné de la paroi de l'engin, une surface absorbante avec une absorptivité α_{SOLAR} la plus grande possible dans le domaine du rayonnement solaire, couplée à une faible émissivité ε_{IR} dans le spectre infrarouge,
- au moins une seconde surface d'émission avec une émissivité ε_{IR} dans le spectre infrarouge supérieure ou égale à 0.7, rayonnant vers l'extérieur de l'engin mais non vers la partie externe de l'équipement,
- des moyens de transport de chaleur entre la surface absorbante et les surfaces d'émission.

2. Engin selon la revendication 1, **caractérisé en ce que** l'écran absorbant (13) est réalisé dans un matériau très conducteur de la chaleur, et présente sur au moins une partie de sa face postérieure, adaptée à être orientée vers la paroi de l'engin, une forte émissivité ε_{IR} dans le spectre infrarouge, typiquement supérieure ou égale à 0.7.

3. Engin selon l'une quelconque des revendications précédentes, **caractérisé en ce que** :
- les moyens de transport de chaleur comprennent une boucle fluide haute température à laquelle est liée conductivement l'écran absorbant (13) au niveau d'au moins un évaporateur,
- ladite boucle fluide étant elle-même liée conductivement à un radiateur haute température formant moyens d'émission de rayonnement.

4. Engin selon l'une quelconque des revendications précédentes, **caractérisé en ce que** l'écran absorbant (13) présente une forme globalement concave apte à être disposée autour de la partie externe de l'équipement.

5. Engin selon la revendication 4, **caractérisé en ce que** l'écran absorbant (13) comporte une première surface (14) sensiblement plane et apte à être disposée de façon parallèle à la paroi (3) de l'engin, dotée de deux rebords latéraux (16, 17) inclinés selon un angle compris entre 20 à 50° par rapport à ladite première surface (14).

6. Engin selon l'une quelconque des revendications 1 à 5, **caractérisé en ce que** l'écran absorbant (13) comporte une surface plane (14), la partie centrale (18) de ladite surface plane (14) recevant un revêtement absorptif présentant une forte absorptivité du rayonnement solaire et faible émissivité ε_{IR} dans le spectre infrarouge, les bords (19) de cette surface recevant un revêtement hautement émissif dans le domaine infrarouge

7. Engin selon l'une quelconque des revendications 1 à 6, **caractérisé en ce que** l'écran absorbant (13) comporte des moyens de fixation et d'isolation conductive de manière à le disposer de façon sensiblement perpendiculaire à l'axe principal de la partie externe de l'équipement.

8. Engin selon l'une quelconque des revendications 1 à 7, **caractérisé en ce que** l'écran absorbant (13) est composé de plusieurs parties adaptées à être assemblées autour de la partie externe de l'équipement lorsque celui-ci est déjà installé sur un engin.

9. Engin selon la revendication 1, **caractérisé en ce que** l'écran absorbant est un élément de couverture isolante multicouche haute température absorbante (21) comportant une feuille de forte absorptivité du rayonnement solaire et faible émissivité ε_{IR} dans le spectre infrarouge.

10. Procédé d'aménagement thermique d'un engin selon l'une quelconque des revendications 1 à 9, **caractérisé en ce qu'**il comporte une étape d'installation d'au moins un écran absorbant (13) sur au moins une partie externe d'un équipement, selon leur température maximale estimée ou mesurée lors d'un essai.

## Patentansprüche

1. Gerät, das in einer Hochvakuumumgebung angeordnet ist, umfassend zumindest eine Apparatur, einen äußeren Abschnitt (7) der Apparatur, der nach außen über eine Wand (3) des Gerätes übersteht, und einem Strahlungsfluss durch eine externe Quelle (15) ausgesetzt ist, wobei das Gerät eine Vorrichtung zur Temperaturkontrolle aufweist, **dadurch gekennzeichnet, dass** die Vorrichtung zur Temperaturkontrolle folgendes aufweist:
- erste Vorrichtungen zum Auffangen zumindest eines Teils der von der externen Strahlungsquelle (15) ausgesandten Strahlung, wobei die besagten Auffangvorrichtungen einen absorbierenden Schirm (13) umfassen, der zwischen dem externen Abschnitt (7) der Apparatur und der Wand (3) des Gerätes angeordnet ist, und dieser Schirm (13) auf zumindest einem Abschnitt seiner Vorderseite, der auf der von Gerätewand entfernten Seite angeordnet ist, eine absorbierende Fläche mit einem größtmöglichen Absorptionsvermögen α_{SOLAR} für die Sonnenstrahlung aufweist, und mit einem geringen Emissionsvermögen ε_{IR} im Infrarotspektrum gekoppelt ist,
- zumindest eine zweite Emissionsfläche mit einem Emissionsvermögen ε_{IR} im Infrarotspektrum größer oder gleich 0.7, die außerhalb des Gerätes, jedoch nicht in den externen Abschnitt der Apparatur strahlt,
- Wärmeübertragungsvorrichtungen zwischen der absorbierenden Fläche und den Emissionsflächen.

2. Gerät nach Anspruch 1, **dadurch gekennzeichnet, dass** der absorbierende Schirm (13) aus einem besonders wärmeleitenden Material hergestellt wird, und in zumindest einem Abschnitt seiner Rückseite, der sich dazu eignet, zur Gerätewand ausgerichtet zu werden, ein starkes Emissionsvermögen ε_{IR} im Infrarotspektrum aufweist, das typischerweise größer oder gleich 0.7 ist.

3. Gerät nach irgendeinem der vorherigen Ansprüche, **dadurch gekennzeichnet, dass**:
- die Wärmeübertragungsvorrichtungen eine Hochtemperaturfluidschleife umfassen, mit der der absorbierende Schirm (13) im Bereich von zumindest einem Verdampfer leitend verbunden ist,
- die besagte Fluidschleife selbst leitend mit einem Hochtemperaturradiator verbunden ist, der Strahlungsemissionsvorrichtungen bildet.

4. Gerät nach irgendeinem der vorherigen Ansprüche, **dadurch gekennzeichnet, dass** der absorbierende Schirm (13) eine im Allgemeinen konkave Form aufweist, die sich dazu eignet, um den externen Abschnitt der Apparatur angeordnet zu werden.

5. Gerät nach Anspruch 4, **dadurch gekennzeichnet, dass** der absorbierende Schirm (13) eine erste in etwa ebene Fläche (14) aufweist, die sich dazu eignet, parallel zur Wand (3) des Gerätes angeordnet zu werden, die mit zwei seitlichen Rändern (16, 17) versehen ist, die in einem Winkel von 20 bis 50° im Verhältnis zur besagten ersten Fläche (14) geneigt sind.

6. Gerät nach irgendeinem der Ansprüche 1 bis 5, **dadurch gekennzeichnet, dass** der absorbierende Schirm (13) eine ebene Fläche (14) aufweist, und der zentrale Abschnitt (18) der besagten ebenen Fläche (14) eine absorbierende Beschichtung erhält, die ein starkes Absorptionsvermögen für Sonnenstrahlung und ein geringes Emissionsvermögen ε_{IR} im Infrarotspektrum aufweist, und die Ränder (19) dieser Fläche eine hochemissive Beschichtung im Infrarotbereich erhalten.

7. Gerät nach irgendeinem der Ansprüche 1 bis 6, **dadurch gekennzeichnet, dass** der absorbierende Schirm (13) Vorrichtungen zur Befestigung und zur leitenden Isolierung umfasst, sodass er in etwa senkrecht zur Hauptachse des externen Abschnitts der Apparatur angeordnet wird.

8. Gerät nach irgendeinem der Ansprüche 1 bis 7, **dadurch gekennzeichnet, dass** sich der absorbierende Schirm (13) aus mehreren Abschnitten zusammensetzt, die sich dazu eignen, um den externen Abschnitt der Apparatur montiert zu werden, wenn diese bereits auf einem Gerät installiert ist.

9. Gerät nach Abschnitt 1, **dadurch gekennzeichnet, dass** der absorbierende Schirm eine absorbierende mehrschichtige Hochtemperatur-Isolierabdeckung (21) ist, die eine Folie mit starkem Absorptionsvermögen für Sonnenstrahlung und einem geringen Emissionsvermögen ε_{IR} im Infrarotspektrum umfasst.

10. Verfahren zur thermischen Anordnung eines Gerätes nach irgendeinem der Ansprüche 1 bis 9, **dadurch gekennzeichnet, dass** es einen Schritt zur Installation zumindest eines absorbierenden Schirms (13) auf zumindest einem externen Abschnitt einer Apparatur umfasst, je nachdem welche Höchsttemperatur bei einem Versuch geschätzt oder gemessen wird.

## Claims

1. Craft placed in a forced vacuum environment, comprising at least one piece of equipment, an outside part (7) of the equipment projecting outside of a wall (3) of the craft and being subjected to a radiation flux by an external source (15), **characterized in that** the craft comprises a device for thermal monitoring comprising :
- first collection means of at least a portion of the radiation emitted by the external radiation source (15), said collection means comprising an absorbent screen (13) that is suitable for being placed between the outside part (7) of the equipment and the wall (3) of the craft, this screen (13) having - on at least one portion of its front face, designed to be placed on the side removed from the wall of the craft - an absorbent surface with the largest possible absorptivity α_{SOLAR} in the field of solar radiation, linked to a low emissivity ε_{IR} in the infrared spectrum,
- at least a second emission surface with a high emissivity ε_{IR} in the infrared spectrum, radiating toward the outside of the craft but not toward the outside part of the equipment,
- means for heat transport between the absorbent surface and the emission surfaces.

2. Craft according to Claim 1, wherein the absorbent screen (13) is made of a very heat-conductive material and has - on at least one part of its rear face, suitable for being oriented to the wall of the craft - a high emissivity ε_{IR} in the infrared spectrum, typically greater than or equal to 0.7.

3. Craft according to any of the preceding claims, wherein:
- the heat transport means comprise a high-temperature fluid loop to which the absorbent screen (13) is linked conductively at at least one evaporator,
- said fluid loop is itself linked conductively to a high-temperature radiator that forms radiation emission means.

4. Craft according to any of the preceding claims, wherein the absorbent screen (13) has an overall concave shape that can be placed around the outside part of the equipment.

5. Craft according to Claim 4, wherein the absorbent screen (13) comprises a first surface (14) that is essentially flat and able to be placed parallel to the wall (3) of the craft, equipped with two lateral flanges (16, 17) that are inclined according to an angle of approximately 20 to 50° relative to said first surface (14).

6. Craft according to any of Claims 1 to 5, wherein the absorbent screen (13) comprises a flat surface (14), the central part (18) of said flat surface (14) receiving an absorptive coating that has a high absorptivity for solar radiation and low emissivity ε_{IR} in the infrared spectrum, whereby the edges (19) of this surface receive a highly emissive coating in the infrared domain.

7. Craft according to any of Claims 1 to 6, wherein the absorbent screen (13) comprises means for attachment and conductive insulation so as to place it in an essentially perpendicular way to the primary axis of the outside part of the equipment.

8. Craft according to any of Claims 1 to 7, wherein the absorbent screen (13) consists of several parts that are suitable for being assembled around the outside part of the equipment when the latter is already installed on a craft.

9. Craft according to Claim 1, wherein the absorbent screen is an absorbent, high-temperature multilayer insulating cover element (21) that comprises a sheet of high absorptivity for solar radiation and low emissivity ε_{IR} in the infrared spectrum.

10. Process for thermal layout of a craft according to Claim 10, wherein it comprises a stage for installation of at least one absorbent screen (13) on at least one outside part of a piece of equipment, according to their maximum temperature that is estimated or measured during a test.
